# FASCICULE DE BREVET EUROPEEN

(11) **EP 4 154 180 B1**
(45) Date de publication et mention de la délivrance du brevet: **28.08.2024**
(21) Numéro de dépôt: 21725219.6
(22) Date de dépôt: 18.05.2021
(51) Int. Cl.: G06K 19/077

(54) **PROCÉDÉ DE MÉTALLISATION ÉLECTRO-CHIMIQUE D'UN CIRCUIT ÉLECTRIQUE DOUBLE-FACE POUR CARTE À PUCE ET CIRCUIT ÉLECTRIQUE OBTENU PAR CE PROCÉDÉ**
VERFAHREN ZUR ELEKTROCHEMISCHEN METALLISIERUNG EINER DOPPELSEITIGEN ELEKTRISCHEN SCHALTUNG FÜR EINE CHIPKARTE UND MIT DIESEM VERFAHREN HERGESTELLTE ELEKTRISCHE SCHALTUNG
METHOD FOR ELECTROCHEMICAL METALLISATION OF A DOUBLE-SIDED ELECTRICAL CIRCUIT FOR A SMART CARD AND ELECTRICAL CIRCUIT PRODUCED USING SAID METHOD

(30) Priorité: 21.05.2020 FR 2005425
(43) Date de publication de la demande: 29.03.2023
(73) Titulaire: Linxens Holding, 78200 Mantes-la-Jolie (FR)
(72) Inventeur: MICHAUDET, Nicolas, 78200 Mantes-la-Jolie (FR); DUMONT, Thierry, 78200 Mantes-la-Jolie (FR)
(74) Mandataire: INNOV-GROUP
(86) Numéro de dépôt international: PCT/EP2021/063066
(87) Numéro de publication internationale: WO 2021/233869

(56) Documents cités:
- WO-A1-2014/016332
- WO-A1-2014/068145
- FR-A1- 3 006 549

## Description

### Domaine technique

L'invention concerne le domaine des cartes à puce et plus particulièrement le domaine des modules électroniques pour cartes à puce.

### Etat de la technique

Les cartes à puce ont de multiples usages : cartes de crédit, carte SIM pour téléphones portable, cartes de transport, cartes d'identité, etc.

Ces cartes sont généralement constituées d'un support rigide, par exemple en matière plastique, constituant l'essentiel de la carte, dans lequel est incorporé un module électronique fabriqué séparément. Ce module électronique comporte par exemple un circuit électrique flexible muni d'une puce électronique (circuit intégré) et de moyens de connexion de la puce à un dispositif permettant de lire et/ou d'écrire des données enregistrées dans la puce.

L'invention concerne en particulier le domaine des cartes dites « Dual », c'est-à-dire ayant une double interface de communication avec la puce. Autrement dit ces cartes permettent une communication avec ou sans contacts. On les nomme aussi cartes « Combi ».

Pour une utilisation « avec contacts», les contacts sont reliés à la puce et affleurent sur une face du module pour permettre une connexion électrique au dispositif de lecture et/ou écriture, lors de l'introduction de la carte dans ce dispositif.

Pour une utilisation « sans contacts », il existe deux types de cartes Dual.

Selon le premier type de carte, une antenne disposée dans le support de la carte (aussi appelé corps de carte) est électriquement connectée à la puce. Dans ce cas, la puce peut échanger des données avec un dispositif de lecture/écriture, soit en réalisant une connexion électrique directe entre le dispositif de lecture/écriture et les contacts du module, soit en réalisant un couplage électromagnétique direct entre l'antenne et le dispositif de lecture/écriture.

Selon le deuxième type de carte, une première antenne, dite « antenne de module » est intégrée dans le module et permet un couplage électromagnétique, par couplage inductif (donc sans connexion électrique) avec une deuxième antenne, dite « antenne booster ou master », incorporée dans le support rigide de la carte mentionné plus haut. La première antenne est plus petite que la deuxième antenne. La deuxième antenne peut couvrir une aire plus importante sur la carte que celle du module. Ceci permet d'obtenir une portée de communication plus grande. Dans ce cas aussi, la puce peut échanger des données avec un dispositif de lecture/écriture, soit en réalisant une connexion électrique directe entre le dispositif de lecture/écriture et les contacts du module, soit en réalisant un couplage électromagnétique entre l'antenne de module et l'antenne booster d'une part, et l'antenne booster et le dispositif de lecture/écriture d'autre part. L'antenne du module communique (avec un effet de résonnance) en effet ainsi avec un dispositif de lecture et/ou écriture sans contact, par l'intermédiaire de l'antenne booster. Donc les seules connexions physiques dans ce deuxième type de cartes Dual, se trouvent au niveau du module, entre la puce et les contacts et entre la puce et l'antenne de module. Toutes ces connexions sont réalisées sur le module. On évite ainsi d'avoir à réaliser une connexion électrique entre l'antenne incorporée dans le corps de carte et la puce incorporée au module.

On connait, ainsi grâce au document WO2007026077 des modules comprenant un circuit électrique flexible avec une face avant supportant des contacts et une face arrière supportant la puce et l'antenne du module. Des trous (aussi appelés « puits » ou « vias ») sont alors réalisés dans le circuit électrique, puis la paroi interne de ces trous est métallisée pour connecter électriquement les faces avant et arrière du module et relier ainsi les contacts à la puce et aux deux extrémités de l'antenne du module.

Afin de faciliter l'intégration du module dans la carte, l'antenne doit être contenue dans un module dont des dimensions sont définies par la norme ISO 7816-2. Dans ces dimensions, il faut prévoir sur la face arrière du module une zone pour poser la puce, des zones pour les trous métallisés, une zone avec des plots de connexion ou plots de soudure (aussi appelés « bonding pads » selon la terminologie anglosaxonne) pour la connexion de la puce aux contacts et à l'antenne. De plus, il faut que les spires de l'antenne soient réalisées en nombre suffisant, avec une certaine largeur et avec une distance minimale entre les spires pour obtenir les caractéristiques électromagnétiques voulues.

Par ailleurs, pour établir, sur les plots de connexion, une soudure fiable et suffisamment peu résistive, des fils de connexion qui relient électriquement ces plots de connexion à la puce, il faut, sur ces plots de connexion, une ou plusieurs couches métalliques, en épaisseur suffisante. Lorsque ces couches métalliques sont déposées par voie électro-chimique, et que le courant nécessaire au dépôt électro-chimique est apporté par des amenées de courant situées en face avant (voir le document FR3006549 A1), les plots de connexion dédiés à la connexion de la puce aux contacts sont alimentés en courant par l'intermédiaire des contacts et des trous métallisés. Les plots de connexion dédiés à la connexion de la puce à l'antenne peuvent être, quant à eux, alimentés aussi par la face avant via les amenées de courant, éventuellement une piste conductrice en face avant ayant une forme de languette («strap » en anglais) et/ou des contacts non utilisés pour la connexion avec un dispositif de lecture et/ou d'écriture à contact, et au moins pour l'un d'entre eux par les spires de l'antenne. Cependant, lorsque le courant nécessaire au dépôt électro-chimique passe par les spires de l'antenne, de relativement grandes inhomogénéités sont observées entre, d'une part, l'épaisseur des couches métalliques électrodéposées sur les plots dédiés à la connexion de la puce aux contacts et, d'autre part, l'épaisseur des couches métalliques électrodéposées sur le ou les plots dédiés à la connexion de la puce à l'antenne et alimentés via les spires de l'antenne. Il en résulte également que pour obtenir une épaisseur suffisante des couches métalliques électrodéposées sur ces derniers, il faut augmenter considérablement le temps de dépôt.

Toutes ces contraintes rendent donc les nouveaux dessins d'antenne de module très compliqués à concevoir.

Néanmoins, les inventeurs ont trouvé un nouveau circuit électrique double-face pour carte à puce permettant d'obtenir les performances électromagnétiques requises pour les applications mentionnées plus haut, tout en améliorant le procédé de fabrication de ce circuit électrique.

### Résumé de l'invention

Il est ainsi proposé un circuit électrique et un procédé, respectivement conformes aux revendications 6 et 1, dans lesquels au moins un trou métallisé supplémentaire est utilisé pendant les opérations d'électrodéposition de couche(s) de matériau électriquement conducteur sur au moins un plot de connexion dédié à la connexion de l'antenne à la puce, avant d'être isolé électriquement de ce plot de connexion.

Plus particulièrement, il est proposé un procédé de métallisation électro-chimique d'un circuit électrique double-face pour carte à puce communiquant avec et sans contact, dans lequel on fournit un substrat diélectrique flexible comportant une face avant et une face arrière. Des contacts et des amenées de courant électriquement connectées à au moins certains des contacts sont disposés sur la face avant. Des plots de connexion et une antenne sont disposés sur la face arrière. Ces plots de connexion sont dédiés, pour certains, à la connexion d'une puce aux contacts, et pour d'autres, à la connexion de la puce à l'antenne. Au cours de la mise en oeuvre de ce procédé, au moins une couche de matériau électriquement conducteur est déposée par une opération de dépôt électro-chimique au moins sur certains des plots de connexion, en alimentant ces plots de connexion en courant via les amenées de courant, des contacts et des trous métallisés établissant une continuité électrique entre la face avant et la face arrière.

En outre, ce procédé comprend, après l'opération de dépôt électro-chimique d'au moins une couche de matériau électriquement conducteur, une opération consistant à isoler électriquement un trou métallisé (c'est-à-dire au moins l'un des trous métallisés supplémentaires mentionnés plus haut), d'un plot de connexion dédié à la connexion de la puce à l'antenne.

Ainsi, grâce au trou métallisé supplémentaire, il est possible d'alimenter en courant un plot de connexion dédié à la connexion de la puce à l'antenne, directement à partir de la face avant et sans passer par les spires de l'antenne. Mais l'utilisation de ce trou métallisé supplémentaire est temporaire (pendant l'opération de dépôt électrochimique). Ce trou métallisé supplémentaire n'est plus utilisé dans le module finalisé réalisé à partir du circuit électrique obtenu par le procédé selon l'invention.

Ce procédé comporte également éventuellement l'une et/ou l'autre des caractéristiques suivantes considérées chacune indépendamment l'une de l'autre ou en combinaison d'une ou plusieurs autres :
- au moins deux trous métallisés sont utilisés, pendant l'opération de dépôt électro-chimique d'au moins une couche de matériau électriquement conducteur, pour métalliser un plot de connexion d'antenne interne et un plot de connexion d'antenne externe, au moins l'un de ces deux trous métallisés étant isolés électriquement des plots de connexion d'antenne interne et externe au cours d'une opération postérieure à l'opération de dépôt électro-chimique d'au moins une couche de matériau électriquement conducteur ;
- on utilise un même contact sur la face avant relié à deux plots de connexion distincts pour alimenter ces deux plots de connexion pendant l'opération de dépôt électro-chimique d'au moins une couche de matériau électriquement conducteur, par l'intermédiaire de deux trous métallisés, au moins l'un de ces deux trous métallisés étant ensuite isolé électriquement de chacun des plots de connexion ;
- une opération consistant à isoler électriquement au moins un trou métallisé, d'un plot de connexion dédié à la connexion de la puce à l'antenne, est mise en oeuvre à l'aide d'un faisceau laser ;
- le faisceau laser est déplacé sur la surface d'une zone conductrice reliant le trou métallisé au plot de connexion dédié à la connexion de la puce à l'antenne, sans sortir de cette surface, tout autour de ce trou métallisé, pour isoler ce trou métallisé du reste du plot de connexion dédié à la connexion de la puce à l'antenne.

Selon un autre aspect, l'invention concerne un circuit électrique double-face pour carte à puce communiquant avec et sans contact. Ce circuit comprend un substrat diélectrique flexible, avec une face avant et une face arrière. Des contacts et des amenées de courant sont situés sur la face avant. Une antenne et des plots de connexion sont situés sur la face arrière. Certains des plots de connexion sont dédiés à la connexion d'une puce aux contacts et d'autres sont dédiés à la connexion de la puce à l'antenne. En outre, ce circuit comprend au moins un contact obturant au moins deux trous métallisés. L'un de ces trous métallisés est relié à un plot de connexion de contact dédié à la connexion de la puce à ce contact. L'autre de ces trous métallisés est isolé électriquement d'un plot de connexion d'antenne dédié à la connexion de la puce à l'antenne. Il est inutilisé pour une conduction électrique au cours d'un usage opérationnel du circuit électrique dans un module.

Ce circuit électrique comporte également éventuellement l'une et/ou l'autre des caractéristiques suivantes considérées chacune indépendamment l'une de l'autre ou en combinaison d'une ou plusieurs autres :
- un plot de connexion externe de l'antenne est relié électriquement à l'antenne par l'intermédiaire de deux trous métallisés obturés par une piste conductrice située en face avant ;
- un plot de connexion externe de l'antenne est relié électriquement à l'antenne par l'intermédiaire d'un contact ;
- l'antenne forme au moins une boucle autour d'une zone centrale correspondant à une zone de fixation de la puce, et dans lequel tous les plots de connexion des contacts et de l'antenne sont situés autour de cette zone centrale, à l'intérieur d'une boucle de l'antenne ; et
- au moins un trou métallisé isolé électriquement de tous les plots de connexion est entouré d'une zone isolante résultant d'une abrasion à l'aide d'un faisceau laser.

### Brève description des dessins

D'autres caractéristiques, buts et avantages de l'invention apparaîtront à la lecture de la description détaillée qui va suivre, et en regard des dessins annexés, donnés à titre d'exemples non limitatifs et sur lesquels :
[Fig. 1] représente schématiquement en perspective une carte à puce comportant un exemple de module selon l'invention ;
[Fig. 2] représente schématiquement en élévation vue de dessus une portion de circuit électrique correspondant à la face avant, ou face contact, d'un module pour une carte à puce telle que celle de la figure 1 ;
[Fig. 3] représente schématiquement en élévation vue de dessous la portion de circuit électrique représentée sur la figure 2, cette figure 3 correspondant à la face arrière, ou face de soudure (« bonding face » en anglais) du module ;
[Fig. 4] représente schématiquement un détail d'un trou métallisé isolé électriquement à l'aide d'une zone isolante résultant d'une abrasion à l'aide d'un faisceau laser ;
[Fig. 5] représente schématiquement en élévation vue de dessus une variante de la portion de circuit électrique représentée sur la figure 2 ;
[Fig. 6] représente schématiquement en élévation vue de dessous la portion de circuit électrique représentée sur la figure 5 ; et
[Fig. 7] : Figs. 7a à 7h représentent schématiquement en coupe différentes étapes d'un exemple de mode de mise en oeuvre procédé selon l'invention.

### Description détaillée

Un exemple de mode de réalisation d'un circuit électrique selon l'invention est décrit ci-dessous.

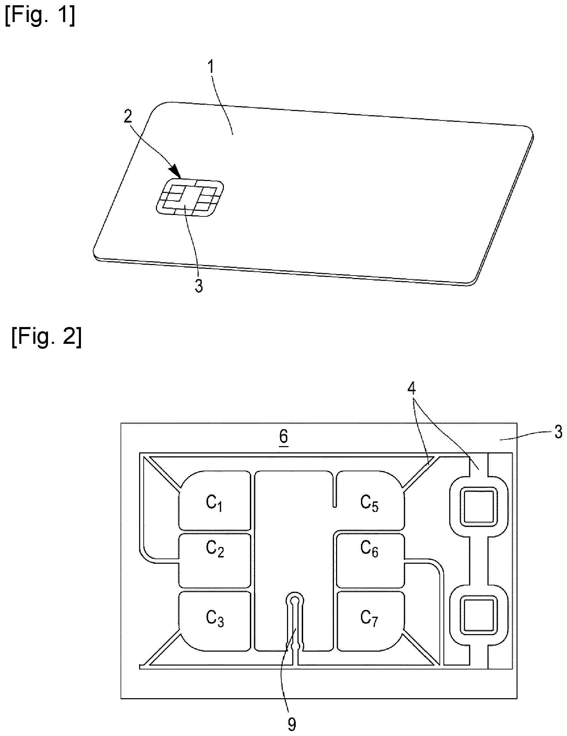

Comme représenté sur la figure 1, une carte à puce 1 communiquant avec et sans contact comporte un module 2. Un module 2 comprend notamment un circuit électrique 3 et une puce 100 (non visible sur la figure 1). Le module 2 est réalisé sous forme d'un élément séparé qui est inséré dans une cavité ménagée dans le corps de la carte 1. Une antenne booster (non représentée) est intégrée dans le corps de la carte 1 d'une manière connue.

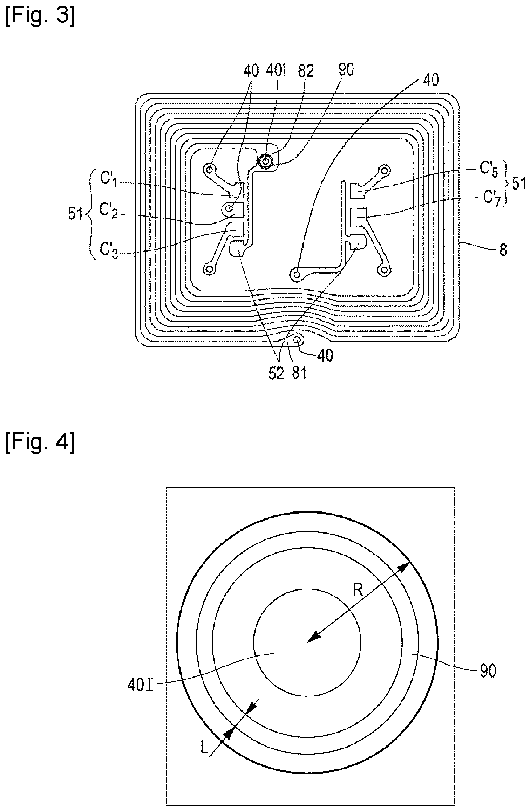

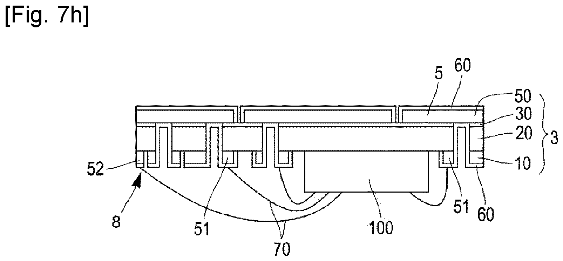

Le circuit électrique 3 comporte plusieurs contacts 5 auxquels est connectée la puce 100 (voir figure 7H). Le circuit électrique 3 est représenté sur la figure 2, par sa face avant 6 (face contact). Il est aussi représenté sur la figure 3 vu par sa face arrière 7 (face bonding). Le circuit électrique 3 représenté sur les figures 2 et 3 correspond à un circuit imprimé double face pour carte « dual », avec des contacts 5 sur la face avant 6 et une antenne 8 sur la face arrière 7. En fait, sur les figures n'est représentée qu'une portion du circuit électrique. Cette portion correspond essentiellement à celle nécessaire à la réalisation d'un module 2. Plusieurs portions semblables peuvent être supportées par un même substrat flexible, par exemple pour une mise en oeuvre du procédé selon l'invention en continu (c'est-à-dire en « reel-to-reel » ou « roll-to-roll » en anglais).

Les contacts 5 sont par exemple au nombre six : C1, C2, C3, C5, C6 et C7. Le contact C1 est utilisé pour une connexion à la borne positive de mise sous tension de la puce 100. Le contact C2 est utilisé pour une connexion à la borne de réinitialisation de la puce 100. Le contact C3 est utilisé pour une connexion à la borne de signal d'horloge de la puce 100. Le contact C5 est utilisé pour une connexion à la borne de mise à la masse de la puce 100. Le contact C6 n'est pas directement connecté à la puce 100, dans les applications visées par l'invention. Le contact C7 est utilisé pour une connexion à la borne d'entrée/sortie de la puce 100.

Dans un module 2 finalisé, chacun des contacts C1, C2, C3, C5 et C7 est donc respectivement relié à une borne de la puce 100, par l'intermédiaire d'un trou 40 métallisé, d'un plot de connexion de contact 51 (c'est-à-dire dédié à la connexion d'un contact à la puce) et par un fil électriquement conducteur 70 connectant un plot de connexion de contact 51 à une borne de la puce 100 (voir Fig. 7h). Sur la figure 3 sont repérés par C'1, C'2, C'3, C'5 et C'7 les plots de connexion de connexion 51 chacun respectivement relié à un contact 5 (respectivement C1, C2, C3, C5 ou C7), par l'intermédiaire d'un trou 40 métallisé. Les figures é et 3 ne sont pas à la même échelle. On comprendra que la surface occupée par l'antenne 8 est essentiellement inférieure ou égale à celle occupée par les contacts 5. La figure 3 est en fait représentée en miroir (ce qui est à droite sur la figure 3 correspond à ce qui est à gauche sur la figure 2 et devrait donc être à gauche et réciproquement) de la configuration réelle afin de faciliter le repérage des plots de connexion de contact 51 (C'1, C'2, C'3, C'5 et C'7) par rapport aux contacts 5 (C1, C2, C3, C5 et C7) tels que représentés sur la figure 2. Ainsi, ces trous 40 métallisés servent à la fois pour connecter, dans le module 2 finalisé, un contact 5 à un plot de connexion de contact 51 et à une borne de la puce 100, mais ils sont aussi utilisés au cours de la ou des opérations de métallisation par voie électrochimique pour permettre de déposer une ou plusieurs couches de matériau électriquement conducteur 60 (par exemple du nickel et de l'or) sur ces plots de connexion de contact 51.

La puce doit aussi être connectée à chacune des deux extrémités de l'antenne 8. A cette fin, deux plots de connexion d'antenne 52 (c'est-à-dire dédiés à la connexion de l'antenne 8 à la puce 100) interne et externe sont prévus sur la face arrière 7. L'antenne 8 comporte plusieurs spires enroulées autour d'une zone centrale correspondant à une zone de fixation de la puce 100. Avantageusement, tous les plots de connexion de contact 51 et d'antenne 52 sont situés autour de cette zone centrale, à l'intérieur des spires de l'antenne 8.

Pour pouvoir réaliser, par voie électrochimique, une opération de métallisation de ces plots de connexion d'antenne 52 interne et externe, il faut que ceux-ci soient reliés aux amenées de courant 4 disposées sur la face avant 6. Les amenées de courant 4 sont des pistes conductrices qui permettent d'établir une connexion électrique entre une électrode d'une cellule d'électrodéposition et les contacts 5. Le plot de connexion d'antenne externe 52 est relié à l'extrémité externe 81 de l'antenne 8 via deux trous 40 métallisés et une piste conductrice 9 reliant, sur la face avant 6, ces deux trous métallisés 40.

Cette piste conductrice 9 est bien entendu elle-même reliée à une amenée de courant 4. Cette piste conductrice 9 est présente dans le mode de réalisation décrit en relation avec les figures 2 et 3, mais peut être supprimée et remplacée par un contact 5 ou une portion de contact 5 selon d'autres modes de réalisation. Le plot de connexion d'antenne interne 52 est relié à l'extrémité interne 82 de l'antenne 8 et au contact C5 par un trou 40I métallisé (sur la figure 3 ce trou 40I métallisé est représenté déjà isolé électriquement du plot de connexion d'antenne interne 52, mais pendant la phase de métallisation, il est bien connecté à celui-ci). Cependant, comme ce contact C5 est utilisé dans le module 2 finalisé pour la mise à la masse, après l'opération de métallisation, ce trou 40I métallisé est isolé électriquement du plot de connexion d'antenne interne 52, par exemple en dégageant, à l'aide d'un faisceau laser, un anneau isolant 90, sur la face arrière 7 autour de ce trou 40I métallisé. Un agrandissement de cette région comprenant le trou 40I métallisé est représentée sur la figure 4. Comme on peut le voir sur les figures 3 et 4, le faisceau laser a été déplacé sur la surface d'une zone conductrice reliant le trou 401 métallisé au plot de connexion de connexion d'antenne interne 52, sans sortir de cette surface, tout autour de ce trou 401 métallisé. Par exemple, la largeur L de la région isolante 90 résultant de l'abrasion des couches conductrices à l'aide d'un faisceau laser est de 17 micromètres. Ainsi, pour des questions de précision, de tolérance et de facilité de réglage des paramètres du faisceau laser, il est préférable de disposer d'une zone couverte de couches conductrices sur un rayon R d'au moins 200 micromètres à partir du centre du trou métallisé 40I.

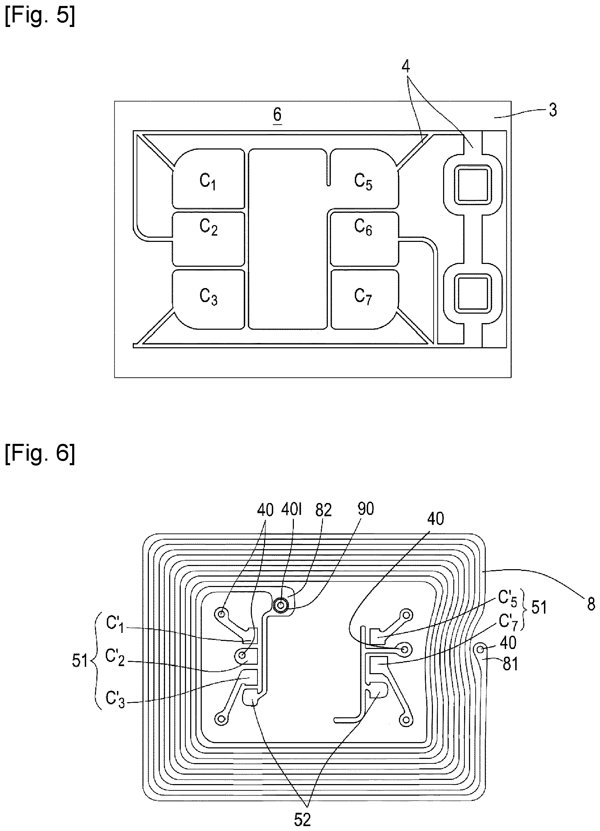

Selon une variante illustrée par les figures 5 et 6, le contact C5 est utilisé pour la métallisation du plot de connexion C'5, et le contact C6, non utilisé dans le module fini et fonctionnel, est utilisé pour la métallisation du plot de connexion 52 relié à l'extrémité externe 81 de l'antenne 8. L'extrémité externe 81 de l'antenne 8 est reliée au contact C6 par un premier trou métallisé 40, puis est reliée au plot de connexion 52 par un deuxième trou métallisé reliant le contact C6 au plot de connexion 52. Ainsi, il est possible de se dispenser de la piste conductrice 9 sur la face avant 6.

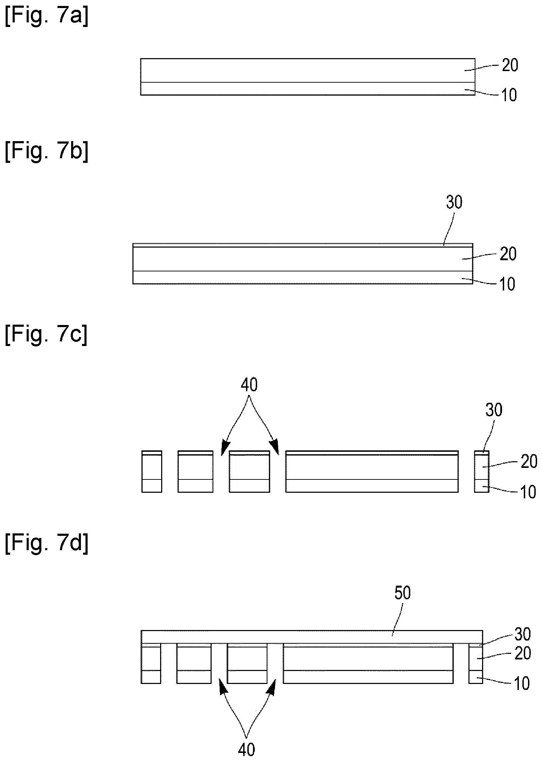

Les figures 7a à 7h illustrent schématiquement différentes étapes d'un exemple de procédé selon l'invention pour la fabrication du circuit électrique 3, ce procédé étant mis en oeuvre en continu.

Comme représenté sur la figure 7a, on fournit une structure comprenant un premier feuillet de matériau électriquement conducteur 10 laminé sur un substrat de matériau électriquement isolant 20. Cette structure (aussi appelée « clad » en anglais) peut être obtenue en laminant ensemble directement le premier feuillet de matériau électriquement conducteur 10 et le substrat de matériau électriquement isolant 20. Alternativement, une couche de matériau adhésif non-représentée peut être enduite ou laminée sur le premier feuillet de matériau électriquement conducteur 10 et/ou le substrat de matériau électriquement isolant 20, avant de les laminer ensemble avec la couche de matériau adhésif entre les deux.

Le premier feuillet de matériau électriquement conducteur 10 peut être formé d'un métal tel que du cuivre, de l'acier, de l'aluminium ou un alliage de ces métaux. Le premier feuillet de matériau électriquement conducteur 10 fait par exemple 18 micromètres ou 25 micromètres d'épaisseur. Le substrat de matériau électriquement isolant 20 est formé d'un matériau diélectrique par exemple de type composite (verre-époxy) ou de type matière plastique (PET, PEN, polyimide, etc.). Le substrat de matériau électriquement isolant 20 est généralement mince (son épaisseur est par exemple de l'ordre de 100 micromètres) pour conserver une flexibilité compatible avec des procédés de fabrication de modules électroniques 3 en continu. L'ensemble constitué du substrat de matériau électriquement isolant 20 recouvert du premier feuillet de matériau électriquement conducteur 10 forme également un circuit flexible compatible avec des procédés de fabrication de modules électroniques 3 en continu.

A l'étape suivante, illustrée par la figure 7b, un film ou une couche de matériau adhésif 30 est appliqué(e) sur la face du substrat de matériau électriquement isolant 20, opposée à celle sur laquelle se trouve le premier feuillet de matériau électriquement conducteur 10.

A l'étape suivante, illustrée par la figure 7c, des trous 40, 40I sont perforés à travers l'ensemble de la structure obtenue à l'étape précédente. Par exemple, les trous 40, 40I sont perforés par poinçonnage dans une direction essentiellement perpendiculaire au plan de cette structure.

A l'étape suivante, illustrée par la figure 7d, un deuxième feuillet de matériau électriquement conducteur 50 est laminé, sur la couche de matériau adhésif 30, sur la face du substrat de matériau électriquement isolant 20 opposée à celle sur laquelle se trouve le premier feuillet de matériau électriquement conducteur 10. Le fond de ces trous 40, 40I est obturé par le deuxième feuillet de matériau électriquement conducteur 50. Les trous 40, 40I deviennent alors des trous borgnes, aussi appelés puits de connexion (comme expliqué plus loin, ces trous 40, 40I sont métallisés à une étape ultérieure pour les rendre électriquement conducteurs).

Le deuxième feuillet de matériau électriquement conducteur 50 peut être formée d'un métal tel que du cuivre, de l'acier, de l'aluminium ou un alliage de ces métaux. Le deuxième feuillet de matériau électriquement conducteur 50 fait par exemple 18, 25 ou 35 micromètres d'épaisseur.

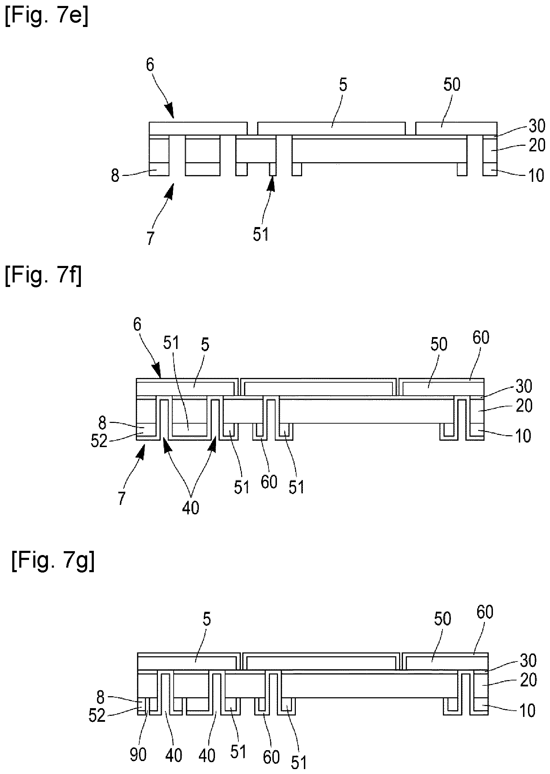

A l'étape suivante, illustrée par la figure 7e, des motifs sont réalisés de manière connue, par photolithographie, dans chacune des premier 10 et deuxième 50 feuillets de matériau électriquement conducteur. Sur la face avant 6, c'est-à-dire dans le deuxième feuillet de matériau électriquement conducteur 50, ces motifs comprennent des contacts 5 et des amenées de courant 4 (non visibles sur la figure 7e). Sur la face arrière 7, c'est-à-dire dans le premier feuillet de matériau électriquement conducteur 10, ces motifs comprennent principalement des plots de connexion de contact 51 et d'antenne 51, ainsi qu'une antenne 8.

A l'étape suivante, illustrée par la figure 7F, une ou plusieurs couches de matériaux électriquement conducteurs 60 sont déposées par voie électrochimique sur au moins les contacts 5, sur les plots de connexion 51, 52 et dans des trous 40. Une partie de cette étape (par exemple l'étape permettant de rendre les trous conducteurs) peut avoir été réalisée précédemment. La ou les couches de matériaux électriquement conducteurs 60 peuvent comprendre un ou plusieurs des métaux compris dans la liste suivante : nickel, or, palladium, argent et/ou alliages de ceux-ci. Des masques sont éventuellement utilisés pour déposer sélectivement certains de ces matériaux électriquement conducteurs sur certaines zones et pas sur d'autres, ou encore en plus ou moins grandes épaisseurs en fonction des zones et/ou du matériau électriquement conducteur déposé. Le dépôt par voie électrochimique de cette ou ces couches de matériaux électriquement conducteurs 60 est important pour pouvoir ensuite souder de manière fiable sur les plots de connexion 51, 52, des fils électriquement conducteurs 70 connectant électriquement la puce 100 aux plots de connexion 51, 52. Le dépôt par voie électrochimique de cette ou ces couches de matériaux électriquement conducteurs 60 sur la face arrière 7 est rendu possible par le passage du courant, via les trous 40, 40I métallisés, entre les amenées de courant 4 et les contacts 5 se trouvant sur la face avant 6 et les plots de connexion 51, 52, l'antenne 8 et d'éventuelles autres pistes se trouvant sur la face arrière 7. On peut remarquer qu'à ce stade, certains contacts 5 (par exemple à droite sur la figure 7f) sont électriquement connectés à un seul trou 40 métallisé et essentiellement à un plot de connexion 51, tandis qu'au moins un autre (à gauche sur la figure 7f) est électriquement connecté à deux trous 40 métallisés et essentiellement à un plot de connexion de contact 51 et un plot de connexion d'antenne 51. Pour ce contact 5 connecté à deux trous 40 métallisés, les deux trous 40 métallisés et les deux plots de connexion 51, 52 sont donc en court-circuit au moins par la face avant 6.

L'étape suivante, illustrée par la figure 7g, consiste essentiellement à décourt-circuiter au moins certains trous 40 métallisés et les plots de connexion 51, 52 reliés électriquement entre eux. L'isolation (décourt-circuitage) se fait notamment pour les trous qu'il est indispensable d'isoler. Ceci peut se faire avantageusement, à l'aide d'un faisceau laser. Avantageusement, un rond 90 est réalisé dans la ou les couches de matériaux électriquement conducteurs 60, ainsi que dans le premier feuillet de matériau électriquement conducteur 10. Le faisceau laser permet ainsi de découvrir le substrat de matériau électriquement isolant 20, c'est-à-dire de retirer au niveau de ce rond, la ou les couches de matériaux électriquement conducteurs 60, ainsi que le premier feuillet de matériau électriquement conducteur 10. Bien entendu, d'autres formes peuvent être réalisées à l'aide du faisceau laser, mais il sera privilégié une forme fermée et qui correspond à un déplacement du faisceau sur un matériau dont la structure est homogène. En effet, un déplacement du faisceau laser passant d'une zone au niveau de laquelle le substrat de matériau électriquement isolant 10 est à l'état nu, à une zone recouverte de la ou les couches de matériaux électriquement conducteurs 60, et du premier feuillet de matériau électriquement conducteur 10, nécessite de régler les paramètres sur faisceau laser de manière adaptée pour chacune de ces zones, ce qui, sans être impossible, demande beaucoup de précision. Par contre, un réglage du faisceau laser est plus facile à maîtriser lorsqu'il s'agit de dégager le substrat de matériau électriquement isolant 20 d'un empilement de couches identiques sur tout le parcours du faisceau laser.

Alternativement, cette étape de décourt-circuitage illustrée par la figure 7G, peut être réalisée par photolithogravure., par exemple en mettant en oeuvre des étapes telles que l'application d'un film résistant à l'électro-déposition (« plating resist » en anglais), une insolation et un développement du film, avant métallisation et gravure.

Une fois l'étape de décourt-circuitage réalisée, d'autres étapes peuvent être mises en oeuvre. Par exemple, comme illustré par la figure 7h, une puce 100 est attachée sur la face arrière 7 du substrat de matériau électriquement isolant 20. Puis des fils 70 conducteurs peuvent être connectés à la puce 100, d'une part, et aux plots de connexion 51, 52, d'autre part.

D'autres étapes connues et non représentées peuvent ensuite être mises en oeuvre. Par exemple, l'encapsulation des fils 70 de connexion et de la puce 100 dans une résine, la découpe du circuit électrique 3 pour obtenir des modules 2 individualisés et l'intégration des modules 2 individualisés dans une cavité fraisée dans une carte 1.

L'opération consistant à déposer par voie électrochimique une ou plusieurs couches de matériau conducteur 60 sur les plots de connexion d'antenne 52 n'étant plus dépendante du courant passant par l'antenne 8, il est possible de réaliser des spires d'antenne plus fines et donc de faire plus de spires. Les spires peuvent également être resserrées.

De même, pendant l'opération consistant à déposer par voie électrochimique une ou plusieurs couches de matériau conducteur 60, l'antenne 8 pouvant être reliée à chacune de ses extrémités à la face avant 6 par un trou 40 métallisé, on obtient une meilleure répartition du dépôt de cette ou ces couches de matériau conducteur 60. Ceci permet de réduire l'inductance de l'antenne 8 et d'améliorer ainsi ses performances en radiofréquences.

## Revendications

1. Procédé de métallisation électro-chimique d'un circuit électrique (3) double-face pour carte à puce communiquant avec et sans contact, dans lequel on fournit un substrat (20) diélectrique flexible comportant une face avant (6) et une face arrière (7), avec sur la face avant (6) des contacts (5) et des amenées de courant (4) électriquement connectées à au moins certains des contacts (5), et avec sur la face arrière (7), une antenne (8) et des plots de connexion (51, 52) dédiés, pour certains (51), à la connexion d'une puce (100) aux contacts (5), et pour d'autres (52), à la connexion de la puce (100) à l'antenne (8), ce procédé comporte une opération de dépôt électro-chimique d'au moins une couche de matériau électriquement conducteur (60) au moins sur certains des plots de connexion (51, 52), en alimentant ces plots de connexion (51, 52) en courant via les amenées de courant (4), des contacts (5) et des trous (40) métallisés établissant une continuité électrique entre la face avant (6) et la face arrière (7),
**caractérisé par le fait qu'**il comprend, après l'opération de dépôt électro-chimique d'au moins une couche de matériau électriquement conducteur (60), une opération consistant à isoler électriquement au moins un trou (40I) métallisé, d'un plot de connexion (52) dédié à la connexion de la puce (100) à l'antenne (8).

2. Procédé selon la revendication 1, dans lequel au moins deux trous (40) métallisés sont utilisés, pendant l'opération de dépôt électro-chimique d'au moins une couche de matériau électriquement conducteur (60), pour métalliser un plot de connexion d'antenne (52) interne et un plot de connexion d'antenne (52) externe , au moins l'un de ces deux trous (40) métallisés étant isolés électriquement des plots de connexion d'antenne (52) interne et externe au cours d'une opération postérieure à l'opération de dépôt électro-chimique d'au moins une couche de matériau électriquement conducteur (60).

3. Procédé selon l'une des revendications précédentes, dans lequel on utilise un même contact (5) sur la face avant (6) relié à deux plots de connexion (51, 52) distincts pour alimenter ces deux plots de connexion (51, 52) pendant l'opération de dépôt électro-chimique d'au moins une couche de matériau électriquement conducteur (60), par l'intermédiaire de deux trous (40) métallisés, au moins l'un de ces deux trous (40) métallisés étant ensuite isolé électriquement de chacun des plots de connexion (51, 52).

4. Procédé selon l'une des revendications précédentes, dans lequel une opération consistant à isoler électriquement au moins un trou (40) métallisé, d'un plot de connexion (52) dédié à la connexion de la puce (100) à l'antenne (8), est mise en oeuvre à l'aide d'un faisceau laser.

5. Procédé selon la revendication précédente, dans lequel le faisceau laser est déplacé sur la surface d'une zone conductrice reliant le trou (40) métallisé au plot de connexion (52) dédié à la connexion de la puce (100) à l'antenne (8), sans sortir de cette surface, tout autour de ce trou (40) métallisé, pour isoler ce trou (40) métallisé du reste du plot de connexion (52) dédié à la connexion de la puce (100) à l'antenne (8).

6. Circuit électrique (3) double-face pour carte à puce communiquant avec et sans contact, le circuit électronique comprenant un substrat (20) diélectrique flexible, avec une face avant (6) et une face arrière (7), des contacts (5) et des amenées de courant (4) étant situés sur la face avant (6), une antenne (8) et des plots de connexion (51, 52) étant situés sur la face arrière (7), certains (51) des plots de connexion étant dédiés à la connexion d'une puce (100) aux contacts (5) et d'autres (52) étant dédiés à la connexion de la puce (100) à l'antenne (8), **caractérisé par le fait qu'**il comprend au moins un contact (5) obturant au moins deux trous (40) métallisés, l'un des trous (40) métallisés étant relié à un plot de connexion de contact (51) dédié à la connexion de la puce (100) à ce contact (5) et l'autre de ces trous (40I) métallisés étant isolé électriquement d'un plot de connexion d'antenne (52) dédié à la connexion de la puce (100) à l'antenne (8).

7. Circuit électrique selon la revendication précédente, dans lequel un plot de connexion (52) externe de l'antenne (8) est relié électriquement à l'antenne (8) par l'intermédiaire de deux trous (40) métallisés obturés par une piste conductrice (9) située en face avant (6).

8. Circuit électrique selon la revendication 6, dans lequel un plot de connexion (52) externe de l'antenne (8) est relié électriquement à l'antenne (8) par l'intermédiaire d'un contact (5).

9. Circuit électrique selon l'une des revendications 6 à 8, dans lequel l'antenne (8) forme au moins une boucle autour d'une zone centrale correspondant à une zone de fixation de la puce (100), et dans lequel tous les plots de connexion (51, 52) des contacts et de l'antenne sont situés autour de cette zone centrale, à l'intérieur d'une boucle de l'antenne.

10. Circuit électrique selon l'une des revendications 6 à 9, dans lequel au moins un trou (40I) métallisé isolé électriquement de tous les plots de connexion (51, 52) est entouré d'une région isolante (90) résultant d'une abrasion à l'aide d'un faisceau laser.

## Patentansprüche

1. Verfahren zur elektrochemischen Metallisierung einer doppelseitigen elektrischen Schaltung (3) für eine Chipkarte, die mit und ohne Kontakt kommuniziert, bei dem ein flexibles dielektrisches Substrat (20) mit einer Vorderseite (6) und einer Rückseite (7) bereitgestellt wird, wobei auf der Vorderseite (6) Kontakte (5) und Stromzuführungen (4) vorhanden sind, die mit mindestens einigen der Kontakte (5) elektrisch verbunden sind, und wobei auf der Rückseite (7) eine Antenne (8) und Anschlussflächen (51, 52) vorhanden sind, die für einige (51) gewidmet sind, der Verbindung eines Chips (100) mit den Kontakten (5) und für andere (52) der Verbindung des Chips (100) mit der Antenne (8) dienen, umfasst dieses Verfahren einen Vorgang der elektrochemischen Abscheidung von mindestens einer Schicht aus elektrisch leitendem Material (60) zumindest auf einigen der Anschlussflächen (51, 52), wobei diese Anschlussflächen (51, 52) über die Stromzuführungen (4), Kontakte (5) und metallisierte Löcher (40) mit Strom versorgt werden, die eine elektrische Kontinuität zwischen der Vorderseite (6) und der Rückseite (7) herstellen,
**dadurch gekennzeichnet, dass** sie nach dem Vorgang der elektrochemischen Abscheidung mindestens einer Schicht aus elektrisch leitfähigem Material (60) einen Vorgang umfasst, der darin besteht, mindestens ein metallisiertes Loch (40I) eines Anschlussflecks (52), der der Verbindung des Chips (100) mit der Antenne (8) gewidmet ist, elektrisch zu isolieren.

2. Verfahren nach Anspruch 1, bei dem mindestens zwei metallisierte Löcher (40) während des Vorgangs der elektrochemischen Abscheidung mindestens einer Schicht aus elektrisch leitfähigem Material (60) verwendet werden, um einen inneren Antennenanschlussfleck (52) und einen äußeren Antennenanschlussfleck (52) zu metallisieren , wobei mindestens eines dieser beiden metallisierten Löcher (40) in einem Vorgang nach dem elektrochemischen Abscheiden mindestens einer Schicht aus elektrisch leitfähigem Material (60) von den inneren und äußeren Antennenanschlussflächen (52) elektrisch isoliert wird.

3. Verfahren nach einem der vorhergehenden Ansprüche, bei dem ein und derselbe Kontakt (5) auf der Vorderseite (6) verwendet wird, der mit zwei getrennten Anschlussflächen (51, 52) verbunden ist, um diese beiden Anschlussflächen (51, 52) während des Vorgangs der elektrochemischen Abscheidung mindestens einer Schicht aus elektrisch leitfähigem Material (60) über zwei metallisierte Löcher (40) mit Strom zu versorgen, wobei mindestens eines dieser beiden metallisierten Löcher (40) anschließend von jeder der Anschlussflächen (51, 52) elektrisch isoliert wird.

4. Verfahren nach einem der vorhergehenden Ansprüche, bei dem ein Vorgang der elektrischen Isolierung mindestens eines metallisierten Lochs (40) eines Verbindungsstücks (52), das der Verbindung des Chips (100) mit der Antenne (8) gewidmet ist, mit Hilfe eines Laserstrahls durchgeführt wird.

5. Verfahren nach dem vorhergehenden Anspruch, bei dem der Laserstrahl auf der Oberfläche eines leitenden Bereichs bewegt wird, der das metallisierte Loch (40) mit der Anschlussfläche (52) verbindet, die der Verbindung des Chips (100) mit der Antenne (8) gewidmet ist, ohne diese Oberfläche zu verlassen, um das metallisierte Loch (40) herum, um dieses metallisierte Loch (40) vom Rest der Anschlussfläche (52) zu isolieren, die der Verbindung des Chips (100) mit der Antenne (8) gewidmet ist.

6. Doppelseitige elektrische Schaltung (3) für eine Chipkarte, die mit und ohne Kontakt kommuniziert, wobei die elektrische Schaltung ein flexibles dielektrisches Substrat (20) mit einer Vorderseite (6) und einer Rückseite (7) umfasst, wobei sich auf der Vorderseite (6) Kontakte (5) und Stromzuführungen (4) befinden, eine Antenne (8) und Anschlussflächen (51, 52), die sich auf der Rückseite (7) befinden, wobei einige (51) der Anschlussflächen der Verbindung eines Chips (100) mit den Kontakten (5) gewidmet sind und andere (52) der Verbindung des Chips (100) mit der Antenne (8) gewidmet sind, **dadurch gekennzeichnet, dass** er mindestens einen Kontakt (5) umfasst, der mindestens zwei metallisierte Löcher (40) verschließt, wobei eines der metallisierten Löcher (40) mit einem Kontaktanschlussflächen (51) verbunden ist, der der Verbindung des Chips (100) mit diesem Kontakt (5) gewidmet ist, und das andere dieser metallisierten Löcher (40I) elektrisch von einem Antennenanschlussfleck (52) isoliert ist, der der Verbindung des Chips (100) mit der Antenne (8) gewidmet ist.

7. Elektrische Schaltung nach dem vorhergehenden Anspruch, bei der ein externes Anschlussfläches (52) der Antenne (8) über zwei metallisierte Löcher (40), die durch eine Leiterbahn (9) verschlossen sind, die sich an der Vorderseite (6) befindet, elektrisch mit der Antenne (8) verbunden ist.

8. Elektrische Schaltung nach Anspruch 6, bei der ein externer Anschlussflächer (52) der Antenne (8) über einen Kontakt (5) elektrisch mit der Antenne (8) verbunden ist.

9. Elektrische Schaltung nach einem der Ansprüche 6 bis 8, bei der die Antenne (8) mindestens eine Schleife um einen zentralen Bereich bildet, der einem Bereich zur Befestigung des Chips (100) entspricht, und bei der alle Anschlussflächen (51, 52) der Kontakte und der Antenne um diesen zentralen Bereich innerhalb einer Schleife der Antenne angeordnet sind.

10. Elektrische Schaltung nach einem der Ansprüche 6 bis 9, wobei mindestens ein metallisiertes Loch (40I), das von allen Anschlussflächen (51, 52) elektrisch isoliert ist, von einem isolierenden Bereich (90) umgeben ist, der durch Abschleifen mit einem Laserstrahl entstanden ist.

## Claims

1. Process for electrochemical metallization of a double-sided electrical circuit (3) for a smart card communicating with and without contact, in which a flexible dielectric substrate (20) is provided having a front face (6) and a rear face (7), with, on the front face (6), contacts (5) and current leads (4) electrically connected to at least some of the contacts (5), and with, on the rear face (7), an antenna (8) and connection pads (51, 52) dedicated, for some (51), to the connection of a chip (100) to the contacts (5), and for others (52), to the connection of the chip (100) to the antenna (8), this process comprises an operation of electro-chemical deposition of at least one layer of electrically conductive material (60) at least on some of the connection pads (51, 52), supplying these connection pads (51, 52) with current via the current leads (4), contacts (5) and metallised holes (40) establishing electrical continuity between the front face (6) and the rear face (7),
**characterized in that** it comprises, after the operation of electrochemically depositing at least one layer of electrically conductive material (60), an operation consisting in electrically insulating at least one metallized hole (40I) in a connection pad (52) for connecting the chip (100) to the antenna (8).

2. Process according to claim 1, in which at least two metallized holes (40) are used, during the operation of electrochemical deposition of at least one layer of electrically conductive material (60), to metallize an internal antenna connection pad (52) and an external antenna connection pad (52) , at least one of these two metallised holes (40) being electrically insulated from the internal and external antenna connection pads (52) during an operation subsequent to the operation of electro-chemically depositing at least one layer of electrically conductive material (60).

3. Process according to one of the preceding claims, in which use is made of a single contact (5) on the front face (6) connected to two separate connection pads (51, 52) in order to supply these two connection pads (51, 52) during the operation of electrochemically depositing at least one layer of electrically conductive material (60), via two plated-through holes (40), at least one of these two plated-through holes (40) then being electrically insulated from each of the connection pads (51, 52).

4. Method according to one of the preceding claims, in which an operation consisting of electrically isolating at least one metallised hole (40) in a connection pad (52) for connecting the chip (100) to the antenna (8) is carried out using a laser beam.

5. Method according to the preceding claim, in which the laser beam is moved over the surface of a conductive zone connecting the metallized hole (40) to the connection pad (52) dedicated to the connection of the chip (100) to the antenna (8), without leaving this surface, all around this metallized hole (40), in order to isolate this metallized hole (40) from the rest of the connection pad (52) dedicated to the connection of the chip (100) to the antenna (8).

6. Double-sided electrical circuit (3) for a smart card communicating with and without contact, the electrical circuit comprising a flexible dielectric substrate (20), with a front face (6) and a rear face (7), contacts (5) and current leads (4) being located on the front face (6), an antenna (8) and connection pads (51, 52) being located on the rear face (7), some (51) of the connection pads being dedicated to the connection of a chip (100) to the contacts (5) and others (52) being dedicated to the connection of the chip (100) to the antenna (8), **characterised in that** it comprises at least one contact (5) closing at least two metallised holes (40), one of the metallised holes (40) being connected to a contact connection pad (51) dedicated to the connection of the chip (100) to this contact (5) and the other of these metallised holes (40I) being electrically insulated from an antenna connection pad (52) dedicated to the connection of the chip (100) to the antenna (8).

7. Electrical circuit according to the preceding claim, in which an external connection pad (52) of the antenna (8) is electrically connected to the antenna (8) via two metallized holes (40) closed by a conductive track (9) located on the front face (6).

8. An electrical circuit as claimed in claim 6, in which a connection pad (52) external to the antenna (8) is electrically connected to the antenna (8) via a contact (5).

9. Electrical circuit according to one of claims 6 to 8, in which the antenna (8) forms at least one loop around a central area corresponding to an attachment area of the chip (100), and in which all the connection pads (51, 52) of the contacts and of the antenna are located around this central area, inside a loop of the antenna.

10. Electrical circuit according to one of claims 6 to 9, in which at least one metallised hole (40I) electrically insulated from all the connection pads (51, 52) is surrounded by an insulating region (90) resulting from abrasion using a laser beam.
